Europäisches Patentamt

European Patent Office

Office européen des brevets

(11) Publication number: **0 132 029**
**B1**

(12) **EUROPEAN PATENT SPECIFICATION**

(45) Date of publication of patent specification: **19.10.88**

(51) Int. Cl.⁴: **C 25 D 17/10**

(21) Application number: **84303501.5**

(22) Date of filing: **23.05.84**

(54) Insoluble lead or lead alloy electrode.

(30) Priority: **13.06.83 JP 89020/83 u**

(43) Date of publication of application:
**23.01.85 Bulletin 85/04**

(45) Publication of the grant of the patent:
**19.10.88 Bulletin 88/42**

(84) Designated Contracting States:
**DE FR GB IT SE**

(56) References cited:
**EP-A-0 090 435**
**US-A-3 803 013**
**US-A-4 380 493**

**The file contains technical information submitted after the application was filed and not included in this specification**

(73) Proprietor: Takayasu, Kiyosumi
5-1, Horita-Dori
Mizuho-Ku Nagoya City (JP)

(72) Inventor: Takayasu, Kiyosumi
5-1, Horita-Dori
Mizuho-Ku Nagoya City (JP)

(74) Representative: Godwin, Edgar James et al
MARKS & CLERK 57-60 Lincoln's Inn Fields
London, WC2A 3LS (GB)

Courier Press, Leamington Spa, England.

## Description

The present invention relates to insoluble lead or lead alloy electrodes: more particularly, what is desired is an insoluble lead or lead alloy electrode for electroplating, which is excellent in energy efficiency and easy to regenerate through repair.

At present, there has been wide use of electrodes made of lead or a lead alloy such as Pb-Sn, Pb-Sb, or the like as an insoluble electrode for use in electroplating with zinc, chromium, or the like. In electrodes of this type, although only substantially one side of the electrode is required as a discharging face, from the standpoint of corrosion resistance there has been used an electrode which is entirely made of lead or the lead alloy, or one wherein all the surfaces of a core member of the electrode plate are subjected to a lead homogenizing treatment.

However, in the known electrode, since it is structurally impossible to prevent the occurrence of the wasteful electric discharge from the back of the electrode the current efficiency is disadvantageously poor. Further, since the dissolving amount of lead is larger, there is also the disadvantage that an area of the lead pollution becomes wider. In addition, if the worn-out electrode is regenerated through repair, it is necessary to make a lead build-up upon the whole surface of the electrode, so that there are various kinds of problems, for example, that it takes not a short time to repair the electrode plate and at the same time it becomes costly to repair.

As a countermeasure for preventing the occurrence of the wasteful electric discharge, that is, the stay current, from the back of the electrode, it has been proposed to form an electric insulating lining of, for instance, resin, rubber, or the like, on the rear surface of the electrode plate. But, such a proposal is not free from the defects that a superfluous step in the repair-regeneration is required with an increased manufacturing cost.

It is, therefore, an object of the invention to advantageously solve the above various problems of the conventional lead or lead alloy electrodes, and to provide an insoluble electrode which fully meets requirements for corrosion resistance and effectively prevents the occurrence of the stay current in electrolysis so as to diminish a wasteful loss in the electric power, while being easy to regenerate through repair.

EP-A-0 090 435 (which is a document under Art. 54 (3) EPC) discloses an electrode comprising an electrode plate to which at least one power supply hanger of electroconductive material may be connected, the electrode plate comprising a base member comprising a core member of electroconductive material and a coating of an electroplated layer of lead or lead alloy to which a sheet of lead or lead alloy is bounded. In the case of aluminium as electroconductive material, the AL is preplated with thick protective layers of e.g. Zu or Su, covered with copper.

The essential features of the invention are the subject of independent claims 1 and 3; claim 2 sets forth a preferred feature of the invention.

The highly corrosion resistant metal comprising titanium, tantalum, or niobium becomes passive in a plating liquid to exhibit excellent corrosion resistance and at the same time effectively prevent wasteful electric discharge due to eddy currents.

The invention will be described more in detail, by way of example only, with reference to the accompanying drawings, in which:

Figure 1 is a sectional view of one embodiment of an insoluble lead alloy electrode; and

Figures 2a, 2b, and 2c are respectively a front view, a side view (part-sectional), and an end view of another embodiment of an insoluble lead alloy electrode.

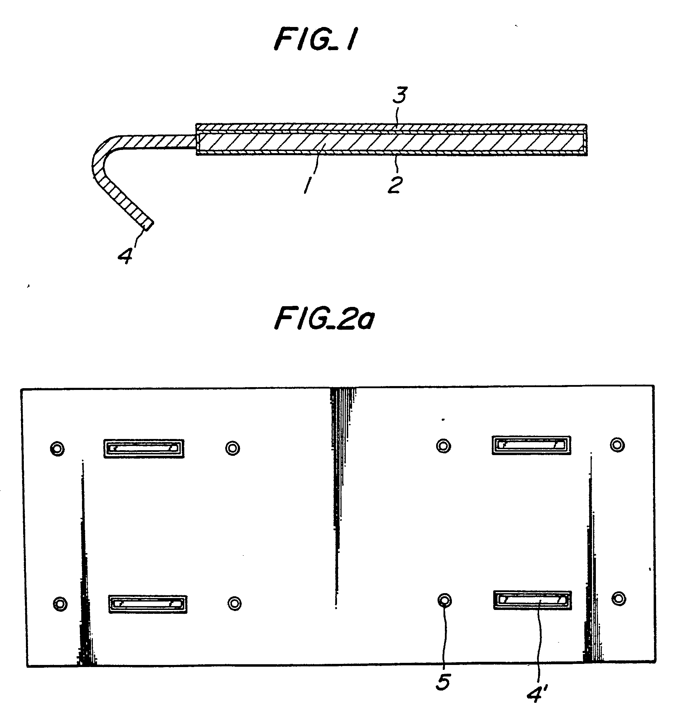

The lead alloy electrode illustrated in Figure 1 comprises an electrode plate having a core member 1, which may be made of iron, copper, or a like highly-electroconductive material. The whole surface of the core member 1 is clad with a film 2 of titanium, to form a base member of the electrode plate. A discharging face is formed by building up a layer 3 of lead alloy on only one of the major surfaces of the base member. The electrode has a power supply hanger 4 made of copper (or iron). As a method of building up the lead alloy upon the titanium cladding, there may be advantageously adapted TIG build-up welding under argon gas shielding.

According to the electrode thus constituted, the amount of lead alloy used is reduced to a large degree, since the build-up of the lead alloy is formed only on one side surface of the electrode. Further, as the titanium is rendered passive in a plating solution, there is no likelihood that a wasteful discharge occurs from the rear surface or the edge surfaces other than the discharging face of the electrode plate at the time of electrolysis. Moreover, when the worn electrode is required to be regenerated through repair, build-up is needed only on one side surface, so that the build-up step is simplified and shortened.

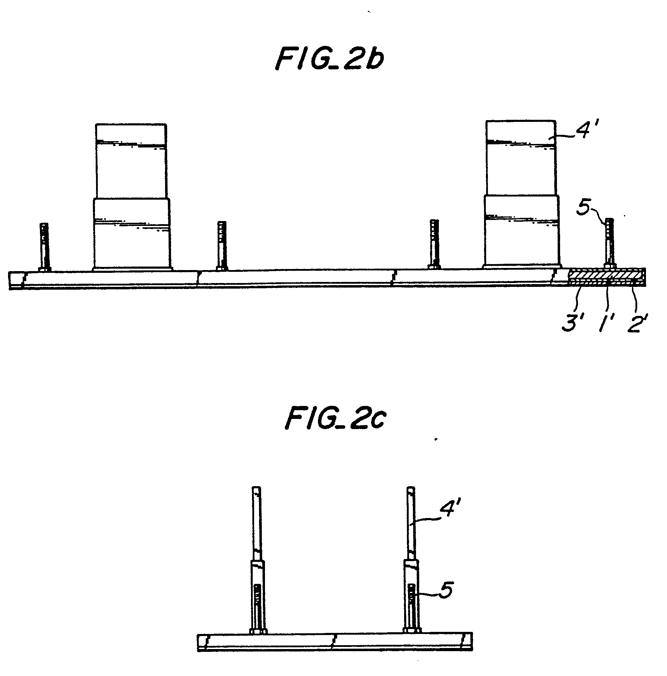

The embodiment illustrated in Figures 2a to 2c is a large scale electrode, comprising a core member l' of the electrode plate, a cladding of a titanium film 2', and a built-up layer of lead alloy 3'. The main constituent features of the electrode plate are the same of those shown in Figure 1. In this embodiment, four, power supply hangers 4 are disposed at the back of the electrode plate. The electric current is supplied to the electrode plate through the hangers 4', and at the same time, the electrode plate is supported at a specified location thereby. Support reinforcements 5 for the electrode plate are also provided.

The advantageous effects confered by the above-described features of the plates will be summarized as follows:

(1) Since the whole core member of the electrode plate is clad with a metal film of a high corrosion resistance, even if the lead alloy is worn out, the core member made of iron or copper will not be exposed to the outside, unlike the conventional case. Thereby, excellent corrosion resistance can be assured.

(2) Since the whole surface of the electrode plate other than the discharging face is rendered passive in the plating liquid, no wasteful discharge occurs from the rear surface and the edge surfaces of the electrode plate. Thereby, the electric current efficiency can be enhanced. Further, since the stay current is eliminated, operation becomes possible at a low electric voltage lowered by a voltage difference corresponding to the eliminated stay current, and excellent plating operation is realized at a low cost.

(3) Since the amount of lead alloy used can be halved, the invention is advantageous in energy saving and the electrode plate becomes light in weight, thereby rendering handling easier.

(4) In repair-regeneration after the electrode wears, there is no need to treat the back (for instance, treating the back with an insulating resin or rubber lining as in the case with the prior art), but it is sufficient merely to build-up only one side of the electrode plate. Therefore, repair is easy and economical.

**Claims**

1. An insoluble lead or lead alloy electrode for use in electroplating, comprising an electrode plate having at least one power supply hanger (4) of electroconductive material connected to it, the electrode plate comprising a base member comprising a core member (1) of highly electroconductive material and a film (2) of highly corrosion resistant metal covering its whole surface, and a layer (3) of lead or lead alloy on only one side surface of the base member, wherein the corrosion resistant metal comprises titanium, tantalum, or niobium, and the lead or lead alloy layer (3) has been built up on the said one side surface.

2. An electrode as claimed in claim 1, in which the electroconductive material is iron or copper.

3. A method of making an electrode according to claim 1, characterized by cladding the core member (1) with the film (2) and applying the lead or lead alloy layer (3) by build-up welding.

**Patentansprüche**

1. Unlösliche Blei- oder Bleilegierungselektrode zur Verwendung beim Galvanisieren, mit einer Elektrodenplatte, die mit mindestens einem Aufhänger (4) aus elektrisch leitendem Material zwecks Stromzufuhr verbunden ist, un die ein Basiselement aufweist, das einen Kernteil (1) aus in hohem Masse elektrisch leitendem Werkstoff und einen Film (2) aus in hohem Masse korrosionsbeständigem Metall aufweist, der die gesamte Oberfläche des Kernteils abdeckt, sowie eine Schicht (3) aus Blei oder Bleilegierung an nur einer Seitenfläche des Basiselementes, dadurch gekennzeichnet, dass das korrosionsbeständige Metall Titan, Tantal oder Niob umfasst, und dass die Schicht (3) aus Blei oder Bleilegierung auf der einen Seitenfläche aufgebaut ist.

2. Elektrode nach Anspruch 1, dadurch gekennzeichnet, dass der elektrisch leitende Werkstoff Eisen oder Kupfer ist.

3. Verfahren zur Herstellung einer Elektrode nach Anspruch 1, dadurch gekennzeichnet, dass der Kernteil (1) mit dem Film (2) umkleidet wird, und die Schicht (3) aus Blei oder Bleilegierung durch Aufbauschweissen aufgebracht wird.

**Revendications**

1. Electrode insoluble, en plomb ou en alliage de plomb, destinée à servir en métallisation électrolytique, comprenant une plaque d'électrode à laquelle est ou sont connecté (s) au moins un crochet (4) de suspension, en matériau électroconducteur pour l'alimentation en énergie, la plaque d'électrode comprenant un élément de base comportant un élément central (1) en un matériau fortement électroconducteur, dont la totalité de la surface est recouverte par une pellicule (2) de métal haute ment résistant à la corrosion, et une couche (3) de plomb ou d'alliage de plomb sur une surface latérale seulement de l'élément de base, électrode dans laquelle le métal résistant à la corrosion comprend du titane, du tantale ou du niobium, et la couche (3) de plomb ou d'alliage de plomb a été formée par accumulation sur ladite surface latérale.

2. Electrode telle que revendiquée à la revendication 1, dans laquelle le matériau électroconducteur est du fer ou du cuivre.

3. Procédé pour fabriquer une électrode selon la revendication 1, caactérisé en ce qu'on revêt l'élément central (1) par un placage de la pellicule (2), et l'on applique la couche (3) de plomb ou d'alliage de plomb par soudage à superposition.

## FIG. 1

## FIG. 2a

# FIG_2b

# FIG_2c